(19) **Europäisches Patentamt**
**European Patent Office**
**Office européen des brevets**

(11) **EP 1 002 353 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.⁷: **H02J 1/00**

(86) Internationale Anmeldenummer:
**PCT/DE98/02106**

(21) Anmeldenummer: **98946245.2**

(22) Anmeldetag: **27.07.1998**

(87) Internationale Veröffentlichungsnummer:
**WO 99/008357 (18.02.1999 Gazette 1999/07)**

(54) **VERFAHREN UND VORRICHTUNG ZUR VERBESSERUNG DER STROMQUALITÄT IN EINEM NETZ**

METHOD AND DEVICE FOR IMPROVING THE CURRENT QUALITY IN A NETWORK

PROCEDE ET DISPOSITIF POUR AMELIORER LA QUALITE DU COURANT DANS UN RESEAU

(84) Benannte Vertragsstaaten:
**AT CH DE ES FR GB IT LI SE**

(30) Priorität: **11.08.1997 DE 19734722**

(43) Veröffentlichungstag der Anmeldung:
**24.05.2000 Patentblatt 2000/21**

(73) Patentinhaber: **SIEMENS AKTIENGESELLSCHAFT**
**80333 München (DE)**

(72) Erfinder:
• **WEINHOLD, Michael**
**D-91056 Erlangen (DE)**
• **ZUROWSKI, Rainer**
**D-91301 Forchheim (DE)**

(56) Entgegenhaltungen:
**WO-A-96/36097 DE-A- 19 642 596**
**US-A- 4 903 184**

• **DEPENBROCK M ; L TH-N : "Blindstromkompensation und Spannungskonstanthaltung bei leistungsstarken Lichtbogenöfen am Netz mit niedriger Kurzschlußleistung" ELEKTROWÄRME INTERNATIONAL, Bd. 41, Nr. B 6, Dezember 1983, Seiten B254-B260, XP002090515 Essen in der Anmeldung erwähnt**
• **SONNENSCHEIN M ; WEINHOLD M ; ZUROWSKI R : "Shunt-connected power conditioner for improvement of power quality in distribution networks" PROCEEDINGS OF THE ICHQP. 7TH INTERNATIONAL CONFERENCE ON HARMONICS AND QUALITY OF POWER, 16. - 18. Oktober 1996, Seiten 27-32, XP002090516 Las Vegas, NV, USA in der Anmeldung erwähnt**

**Beschreibung**

Die Erfindung bezieht sich auf ein Verfahren und eine Vorrichtung zur Verbesserung der Stromqualität eines Netzes mittels einer parallel zum Netz angekoppelten Kompensationseinrichtung, die einen Pulsstromrichter mit wenigstens einem kapazitiven Speicher, einen Anpaßfilter und eine Regel- und Steuereinrichtung aufweist.

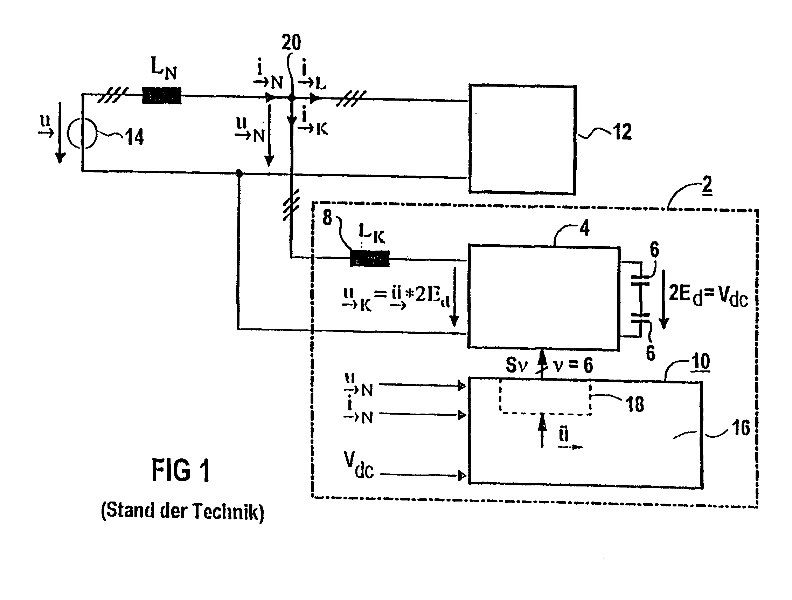

Aus der Veröffentlichung "Shunt-Connected Power Conditioner for Improvement of Power Quality in Distribution Networks", abgedruckt in "International Conference on Harmonics and Quality of Power", Las Vegas, October 16-18, 1996 ist ein Steuerverfahren für eine Kompensationseinrichtung mit paralleler Ankopplung bekannt. Diesem Konferenzbericht ist zu entnehmen, daß der Kompensatorspannungs-Raumzeiger aus der am kapazitiven Speicher abfallenden Spannung und einem Übertragungsverhältnis-Raumzeiger berechnet wird. Außerdem ist diesem Bericht zu entnehmen, daß der Übertragungsverhältnis-Raumzeiger aus mehreren Teilverhältnis-Raumzeigern zusammengesetzt werden kann. Ferner ist angegeben, wie die Teilübertragungsverhältnis-Raumzeiger bestimmt werden. Das in der Veröffentlichung gezeigte Blockschaltbild der Kompensationseinrichtung wird anhand der Darstellung gemäß FIG 1 im folgenden näher beschrieben:

Diese Kompensationseinrichtung 2 weist einen Pulsstromrichter 4 mit wenigstens einem kapazitiven Speicher 6, einen Anpaßfilter 8 und eine Regel- und Steuereinrichtung 10 auf. Diese Kompensationseinrichtung 2 ist elektrisch parallel zu einem nichtidealen Verbraucher 12 geschaltet, der aus einem Netz 14 versorgt wird. Der Regel- und Steuereinrichtung 10 sind ein Netzspannungs-Raumzeiger $\underline{u}_N$, ein NetzstromRaumzeiger $\underline{i}_N$ und ein Zwischenkreis-Spannungs-Istwert $V_{dc}$ = 2 $E_d$, die an den beiden kapazitiven Speichern 6 des Puls-stromrichters 4 abfällt, zugeführt. Diese Raumzeiger $\underline{u}_N$ und $\underline{i}_N$ werden mittels einer Raumzeiger-Transformationseinrichtung aus gemessenen Leiterspannungen und Netzströmen generiert. Das Anpaßfilter 8 ist hier ersatzweise durch eine Induktivität $L_K$ dargestellt, wogegen in der genannten Veröffentlichung dieses Anpaßfilter 8 im Detail dargestellt ist. Die Regel- und Steuereinrichtung 10 weist eine Regeleinrichtung 16 zur Bestimmung eines Übertragungsverhältnis-Raumzeigers $\underline{\ddot{u}}$ und einem Pulsweitenmodulator 18 auf, der durch eine unterbrochene Linie dargestellt ist. Der Übertragungsverhältnis-Raumzeiger $\underline{\ddot{u}}$ ist die Stellgröße des Pulsstromrichters 4, die mittels des Pulsweitenmodulators 18 in Steuersignale $S_v$ für diesen Pulsstromrichter 4 umgewandelt wird.

Laständerungen bewirken Änderungen der Spannungsabfälle an den Netzimpedanzen und damit Änderungen des Effektivwertes der Versorgungsspannung. Bei unsymmetrisch angeschlossenen Verbrauchern sind diese Spannungsabfälle auch unsymmetrisch, d.h., die Amplituden und Effektivwerte der Strangspannungen weisen unterschiedliche Werte auf. Der wesentliche Anteil der Spannungsabfälle an der Netzimpedanz ist den Blindstromanteilen zuzuschreiben, da die Netzimpedanz ein Verhältnis von Reaktanz zu Resistanz aufweist, das in der Regel deutlich größer als Eins ist. Die Versorgungsänderungen rufen bei (Glüh-)Lampen Änderungen der Leuchtdichte hervor. Das menschliche optische Wahrnehmungssystem nimmt diese Leuchtdichteänderungen wahr. Dieses Phänomen wird "Flicker" genannt. Insbesondere im Bereich um 18 Änderungen pro Sekunde (9 Hz) werden die Leuchtdichteänderungen als unangenehm empfunden. Große Spannungsänderungen, die zur Flicker-Erscheinung führen, werden hervorgerufen durch

- Ein- und Ausschaltvorgänge bei größeren Lasten, z.B. Motoranlauf (sprungartige Laständerung)
- Wechsellasten (z.B. Gattersäge, Schmiedpresse, Schmiedehammer)
- Widerstandsschweißanlagen (periodische Laständerungen, meist Einphasenlast)
- Lichtbogenschweißanlagen
- Lichtbogenschmelzöfen (stochastische Laständerungen)
- gepulste Leistungen (z.B. Schwingungspaketsteuerung).

Die Flickerverursacher können in zwei Klassen eingeteilt werden:

1. regelmäßige Laständerungen (wie z.B. bei Schweißanlagen)
2. stochastische auftretende Laständerungen (z.B. bei Lichtbogenöfen).

Diese Unterschiede werden bei der Bewertung des Flickers berücksichtigt. Maßgebende Einflußfaktoren sind Größen, Dauer und zeitliches Aufeinanderfolgen der Spannungsänderungen.

Um unerwünschte Blindströme des Verbrauchers 12 vom Versorgungsnetz 14 fernzuhalten, muß die Kompensationseinrichtung 2 diese Anteile parallel zum Verbraucher 12 einspeisen, so daß sich die Stromanteile der Kompensationseinrichtung 2 am Verknüpfungspunkt 20 mit den Blindstromanteilen des Verbrauchers 12 aufheben.

Zur Blindleistungskompensation und Lastsymmetrierung werden bislang über Schütze oder Thyristoren geregelt oder gesteuert in das Netz geschaltete Blindelemente, eventuell mit fest in das Netz geschalteten Blindelementen eingesetzt. Hierdurch wird die Funktion einer Steinmetzschaltung nachgebildet. Wie nachfolgend dargelegt haben die Geräte allerdings aufgrund der Netzführung unerwünschte Totzeiten und sind teilweise unflexibel. Die bisher in Niederspannungsnetzen eingesetzte Technik zur Entflickerung besteht aus thyristorgeschalteten Kondensatoren (TSC = Thyristor Switched Capacitor) in Verbindung mit fest oder lastabhängig über Schütze zwischen die Netzphasen geschalteten Blindelemente (Drosseln, Kondensatoren). Die Blindelemente bewirken für zweiphasig angeschlossene Flickererzeuger (z.B. Schweißmaschinen in Niederspannungsnetzen) eine Symmetrierung für einen oder mehrere Arbeitspunkte der Last. Mit dem TSC wird dann die Blindleistung ausgeregelt. Insgesamt wird durch diese Anordnung versucht, eine hochdynamische Steinmetzschaltung nachzubilden. Um veränderlichen Lastsituationen gerecht zu werden, müssen definierte Kompensationsstufen unabhängig schaltbar ausgeführt werden. Das Problem bei dieser bislang in Niederspannungsnetzen eingesetzten Technik ist, daß sich die Blindelemente veränderten Lastsituationen nicht flexibel anpassen lassen und die Thyristoren des TSCs nur bei Nulldurchgang der Netzspannungen geschaltet werden können. Hierdurch entsteht eine Erhöhung der Anregelzeit, welche den Grad der Entflickerung reduziert.

Zur Entflickerung in Mittelspannungsnetzen werden vorwiegend über Thyristoren geregelte in das Netz geschaltete Drosseln (TCR = Thyristor-Controlled Reactor) in Verbindung mit LC-Filterkreisen eingesetzt. Der TCR fährt je nach Lastzustand induktiv gegen die einen kapazitiven Betriebspunkt einstellenden Filterkreise. Eine solche Anordnung ist in der DE-Zeitschrift "etzArchiv" Band 11, 1989, Heft 8, Seiten 249 bis 253 beschrieben. Auch hier stellt der netzgeführte Thyristorstromrichter einen Nachteil hinsichtlich der Regelgeschwindigkeit des Systems dar. Außerdem werden durch den Phasenanschnitt der Thyristoren des TCRs Oberschwingungsströme hervorgerufen.

Diese beschriebene Kompensationsanlage weist zusammenfassend folgende Merkmale auf:

- verzögerte, aktive Kompensation von Grundschwingungs-Blindstrom- und -Gegensystemstrom,
- passive Filterung von Oberschwingungsströmen (schmalbandig) durch Unterteilung der Kondensatorbatterie in Filterkreise,
- resistive Dämpfung von Eigenschwingungen, z.B. mit Hilfe von Widerständen in den Filterkreisen.

Die unvermeidbaren Nachteile der bisherigen Blindstrommeßverfahren werden umgangen, wenn man den Wirkstrom über den Ersatzwirkleitwert für den Verbraucher meßtechnisch ermittelt und diesen Wirkstrom von dem verzögerungsfrei meßbaren Verbraucherstrom abzieht, um den zu kompensierenden Blindstrom zu erhalten. Eine Kompensationsanlage, die diesen Strom unverzögert kompensieren kann, ist in der DE-Zeitschrift "Elektrowärme International", Band 41, 1983, B 6, Dezember, Seiten B 254 bis B 260, näher dargestellt. Diese in dieser Veröffentlichung näher dargestellte Steuer- und Regelstruktur zur Blindstromkompensation und Spannungsstabilisierung eines Lichtbogenofens weist ein Wirkleitwertmeßgerät, einen Sollwertrechner, einen Spannungsregler, eine Einrichtung zur Erfassung der Oberschwingungen, ein Steuergerät und zwei Summierer auf. Mittels des Wirkleitwertmeßgerätes wird aus den gemessenen Verbraucherspannungen und -strömen der Wirkleitwert und sein zeitlicher Gradient bestimmt. Der Sollwertrechner simuliert das ideal kompensierte Netz und bildet den notwendigen erforderlichen Sollwert des Stromrichterstromes, mit dem die Kompensationsziele schon weitgehend erreicht werden. Die Dämpfung des aus der Netzinnenimpedanz und der Kondensatorbatterie gebildeten Parallelschwingkreises und die Korrektur etwaiger Rechenungenauigkeiten und Meßfehler in dem Wirkleitwertmeßgerät und dem Sollwertrechner werden mit Hilfe des Spannungsreglers bewirkt. Dazu wird die gemessene Spannung mit ihrem möglichst genau errechneten Sollverlauf verglichen. Auf die Differenz antwortet die Regeleinrichtung mit einem zusätzlichen, kleinen Korrekturstrom, der zum Stromrichterstrom addiert wird. Der Stromrichter wird dann schließlich entsprechend dem zeitlichen Verlauf der Summe gesteuert. Da die Oberschwingungsströme des Stromrichterstromes zum größten Teil über die Kondensatorbatterie fließen, verursachen sie auch Oberschwingungen der Netz-Spannung. Da der Stromrichter die Wirkung seiner eigenen Oberschwingungen nicht selbst kompensieren kann, werden die Oberschwingungen der Netz-Spannung mit Hilfe der Einrichtung zur Erfassung der Oberschwingungen für den Spannungsregler unbeobachtbar gemacht.

Diese Kompensationseinrichtung weist folgende technische Eigenschaften auf:

- sehr gute Dynamik bei der aktiven Blindstromkompensation und Symmetrierung im betrachteten Frequenzbereich,
- aktive Konstanthaltung des Effektwertes der Verbraucherspannung,
- passive und breitbandige Filterung von Oberschwingungsströmen,
- aktive, verlustfreie Dämpfung von Eigenschwingungen.

Diese Kompensationseinrichtung ist sehr aufwendig, da deren Steuer- und Regelstruktur im Zeitbereich arbeitet. Gegenüber einer Kompensationsanlage mit einer fest in das Netz geschalteten Kondensatorbatterie und einer geschalteten Drossel weist die Kompensationsanlage mit einem selbstgeführten Stromrichter eine höhere Dynamik auf, die noch gesteigert werden kann. Eine schnelle Lastsymmetrierung ist mit dieser Kompensationsanlage nicht möglich.

Das Hauptziel der schnellen Blindstromkompensation ist die Vermeidung von Spannungsschwankungen, so daß andere, vom gleichen Netz gespeiste Verbraucher nicht gestört werden. Diese Aufgabe stellt bekanntlich die höchsten Anforderungen an die Dynamik der Kompensationseinrichtungen, besonders wenn in parallel betriebenen Beleuchtungsanlagen kein störendes Lichtflimmern auftreten soll.

Damit eine Last aus Sicht des Netzes bezüglich der Grundschwingung wie ein dreiphasiger, symmetrischer ohmscher Widerstand erscheint, müssen unerwünschte Grundschwingungsstromanteile, und zwar der Gegensystem-Laststrom und der Mitsystem-Blindstrom, aus dem Netzstrom eliminiert werden. Hierdurch wird eine Verminderung der Flickeremission einer Last in das Netz erreicht. Damit der Netzstrom keine unerwünschten Grundschwingungsstromanteile mehr aufweist, müssen folgende Anteile des Laststromes kompensiert werden:

- Blindanteil der Grundschwingung des Mitsystems des Stromes
- Grundschwingung des Gegensystems des Stromes.

Der Erfindung liegt nun die Aufgabe zugrunde, ein Verfahren und eine Vorrichtung zur Verbesserung der Stromqualität eines Netzes anzugeben.

Diese Aufgabe wird erfindungsgemäß gelöst mit den Merkmalen des Anspruchs 1 bzw. Anspruchs 7.

Um die Stromqualität eines Netzes im wesentlichen zu verbessern, müssen die unerwünschten Grundschwingungsstromanteile, nämlich der Gegensystem-Laststrom und der Mitsystem-Blindstrom, aus dem Netzstrom eliminiert werden. Dazu wird ein Kompensatorspannungs-Raumzeiger benötigt, der sich aus einem Kompensatorspannungs-Grundschwingungs-Mitsystem- und Gegensystem-Raumzeiger zusammensetzt. Da der Kompensatorspannungs-Grundschwingungs-Gegensystem-Raumzeiger in Abhängigkeit einer identifizierten Amplitude eines Netzstrom-Grundschwingungs-Gegensystems bestimmt wird, kann der Gegensystem-Laststrom kompensiert werden. Der Kompensator-Grundschwingungs-Mitsystem-Raumzeiger setzt sich aus zwei Spannungskomponenten zusammen, von denen die eine Komponente parallel und die andere Komponente senkrecht zum Netzspannungs-Grundschwingungs-Mitsystem-Raumzeiger verlaufen. Mittels der parallelen Spannungskomponente wird die ermittelte Grundschwingungs-Mitsystem-Blindleistung kompensiert und mittels der senkrechten Spannungskomponente wird der Zwischenkreis-Spannungs-Istwert auf einen vorbestimmten Sollwert geregelt.

Mit diesem erfindungsgemäßen Verfahren kann die bekannte Kompensationseinrichtung gemäß FIG 1 eine hochdynamische Lastsymmetrierung und Blindleistungskompensation hinsichtlich der Grundschwingungsströme einer beliebigen Last durchführen. Der Vorteil dieses Verfahrens ist die Unabhängigkeit der Funktionsweise von Art und Größe der Last. Durch dieses Verfahren kann die bekannte Kompensationseinrichtung eine wesentliche Reduktion des Flickerwertes durchführen. Somit erscheint eine Last aus Sicht des Netzes bezüglich der Grundschwingung wie ein dreiphasiger, symmetrischer, ohmscher Widerstand.

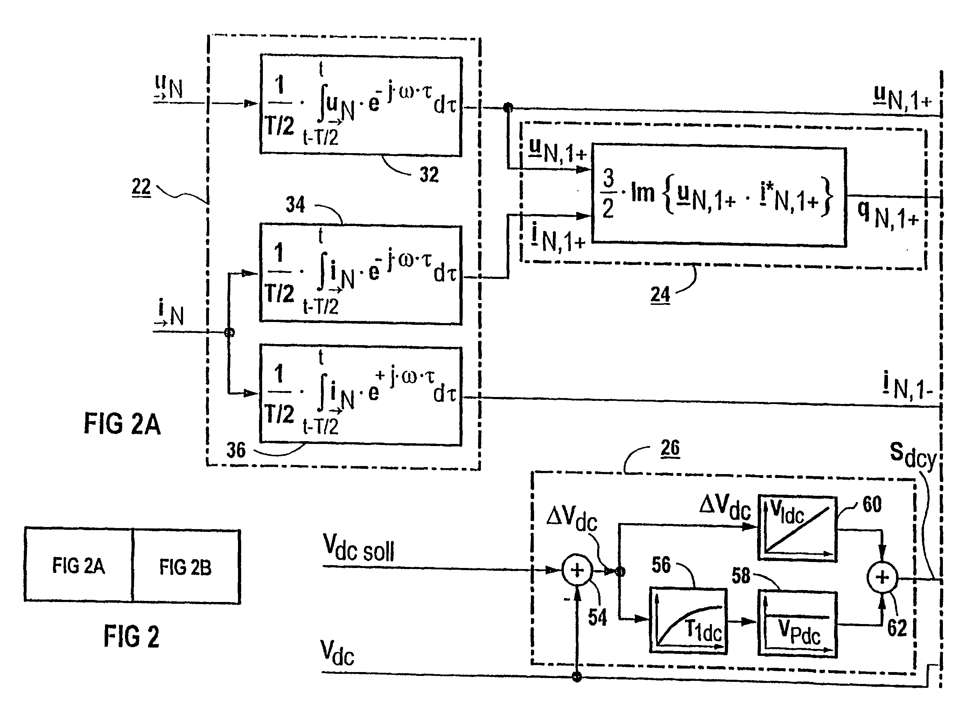

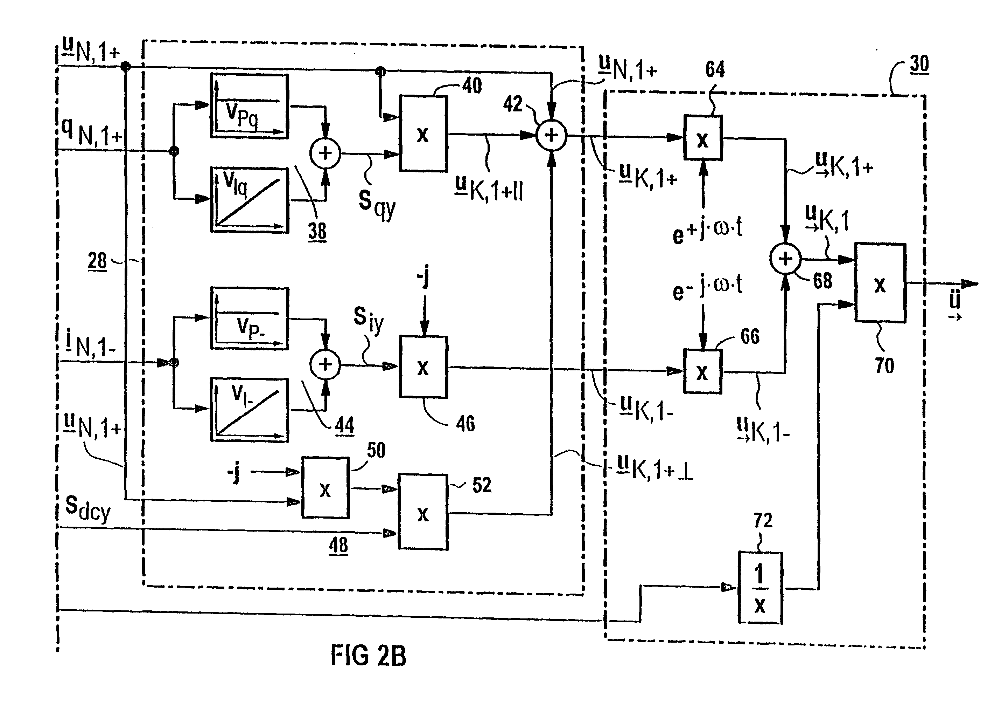

Zur weiteren Erläuterung des erfindungsgemäßen Verfahrens zur Verbesserung der Stromqualität eines Netzes mittels einer Kompensationseinrichtung mit einem Pulsstromrichter wird auf die Figur 2 Bezug genommen, in der ein Ausführungsbeispiel der Vorrichtung zur Durchführung des erfindungsgemäßen Verfahrens schematisch veranschaulicht ist.

FIG 1     zeigt ein Blockschaltbild der eingangs genannten bekannten Kompensationseinrichtung und die

FIG 2     zeigt ein Blockschaltbild einer Vorrichtung zur Durchführung des erfindungsgemäßen Verfahrens.

In der FIG 2 ist ein Blockschaltbild einer Vorrichtung zur Durchführung des erfindungsgemäßen Verfahrens näher dargestellt. Diese Vorrichtung weist eine Identifizierungs-Einrichtung 22, eine Recheneinrichtung 24, einen Zwischenkreis-Spannungs-Regelkreis 26, eine Einrichtung 28 zur Bestimmung komplexer Amplituden $\underline{u}_{K,1+}$ und $\underline{u}_{K,1-}$ eines Kompensatorspannungs-Grundschwingungs-Mit- und Gegensystem-Raumzeigers $\underline{u}_{K,1+}$ und $\underline{u}_{K,1-}$ und einem Raumzeiger-Bildner 30 auf. Der Identifizierungs-Einrichtung 22 sind die ermittelten Netzspannungs- und Netzstrom-Raumzeiger $\underline{u}_N$ und $\underline{i}_N$ zugeführt. Ausgangsseitig ist diese Identifizierungs-Einrichtung 22 mit Eingängen der Recheneinheit 24 und der Einrichtung 28 verknüpft. Die Recheneinheit 24 ist ausgangsseitig ebenfalls mit einem Eingang der Einrichtung 28 verbunden, die außerdem eingangsseitig mit einem Ausgang des Zwischenkreis-Spannungs-Regelkreises 26 verknüpft ist. Die beiden Ausgänge der Einrichtung 28 sind mit dem Raumzeiger-Bildner 30 verbunden, dem eingangsseitig auch noch ein Zwischenkreis-Spannungs-Istwert $V_{dc}$ zugeführt ist. Am Ausgang dieses Raumzeiger-Bildners 30 steht ein Übertragungsverhältnis-Raumzeiger $\underline{\ddot{u}}$ an, aus dem mittels des Pulsweitenmodulators 18 die Steuersignale $S_v$ für den Pulsstromrichter 4 der Kompensationsanlage 2 generiert werden.

In diesem Blockschaltbild sind Raumzeiger durch einen Pfeil gekennzeichnet, wogegen komplexe Größen unterstrichen sind. Der Index 1 gibt an, daß es sich um eine Grundschwingungsgröße handelt, wobei der Index + bzw. - das Mitsystem bzw. das Gegensystem kennzeichnet. Der Index parallele Striche bzw. senkrechte Striche ($\parallel$ bzw. $\perp$) gibt an, daß diese komplexen Amplituden in Richtung oder senkrecht zum Netzspannungs-Grundschwingungs-Mitsystem-Raumzeiger $\underline{u}_{N,1+}$ verläuft. Die Ausgangsgrößen der Regler sind skalare Größen. Bei einer komplexen Größe mit hochgesetztem Stern handelt es sich um eine konjugiert komplexe Größe.

Die Identifizierungs-Einrichtung 22 weist für je-

de zu identifizierende Amplitude $\underline{u}_{N,1+}$, $\underline{i}_{N,1+}$ und $\underline{i}_{N,1-}$ eine Recheneinheit 32, 34 und 36 auf. Der Recheneinheit 32 ist der ermittelte Netzspannungs-Raumzeiger $\underline{u}_N$ und der Recheneinheiten 34 und 36 sind der ermittelte Netzstrom-Raumzeiger $\underline{i}_N$ zugeführt. Am Ausgang der Recheneinheit 32 steht ein komplexer Fourierkoeffizient $\underline{u}_{N,1+}$ mit der Ordnungszahl 1 der betrachteten Schwingung des Mitsystems an. Am Ausgang der Recheneinheit 34 und 36 steht ebenfalls jeweils ein komplexer Fourierkoeffizient $\underline{i}_{N,1+}$ und $\underline{i}_{N,1-}$ an. Jeder komplexe Fourierkoeffizient enthält Informationen über den Betrag und die Phasenlage der zu identifizierenden Größe bezogen auf einen Bezugs-Raumzeiger (Einheits-Raumzeiger). Deshalb werden diese berechneten komplexen Fourierkoeffizienten $\underline{u}_{N,1+}$, $\underline{i}_{N,1+}$ und $\underline{i}_{N,1-}$ im weiteren als Amplituden bezeichnet. Diese komplexen Fourierkoeffizienten erhält man mit einer diskreten komplexen Fouriertransformation. Ein Blockschaltbild einer diskreten komplexen Fouriertransformation ist in dem eingangs genannten Konferenzbericht veranschaulicht. Diese diskrete Fouriertransformation besteht aus einer komplexen Multiplikation mit anschließender Mittelwertbildung. Bei der komplexen Multiplikation wird der zu identifizierende Raumzeiger mit einem Einheits-Raumzeiger multipliziert und das komplexe Produkt über eine Periode des zu identifizierenden Raumzeigers gemittelt. Im Hinblick auf die Dynamik wird hier über eine halbe Periode gemittelt. Zur Kennzeichnung dieser diskreten komplexen Fouriertransformation sind in den Recheneinheiten 32, 34 und 36 die entsprechenden Gleichungen angegeben. An den Ausgängen dieser Identifizierungs-Einrichtung 22 steht somit die komplexe Amplitude $\underline{u}_{N,1+}$ des Netzspannungs-Grundschwingungs-Mitsystems, die komplexe Amplitude $\underline{i}_{N,1+}$ des Netzstrom-Grundschwingungs-Mitsystems und die komplexe Amplitude $\underline{i}_{N,1-}$ des Netzstrom-Grundschwingungs-Gegensystems an.

Die Ausgänge der Identifizierungs-Einrichtung 22, an denen die komplexen Amplituden $\underline{u}_{N,1+}$ und $\underline{i}_{N,1+}$ des Grundschwingungs-Mitsystems anstehen, sind mit den Eingängen der Recheneinheit 24 verknüpft. Der Ausgang der Identifizierungs-Einrichtung 22, an dem die komplexe Amplitude $\underline{i}_{N,1-}$ des Grundschwingungs-Gegensystems ansteht, ist mit einem zweiten Eingang der Einrichtung 28 zur Bestimmung komplexer Amplituden $\underline{u}_{K,1+}$ und $\underline{u}_{K,1-}$ eines Kompensatorspannungs-Grundschwingungs-Mit- und Gegensystems verbunden. Die Recheneinheit 24 errechnet aus den anstehenden Grundschwingungs-Mitsystemanteilen $\underline{u}_{N,1+}$ und $\underline{i}_{N,1+}$ gemäß folgender Gleichung:

$$q_{N,1+} = \frac{3}{2}\cdot \operatorname{Im}\{\underline{u}_{N,1+}\cdot \underline{i}^{*}_{N,1+}\}$$

eine Mitsystem-Grundschwingungs-Blindleistung $q_{N,1+}$, die einem ersten Eingang der nachgeschalteten Einrichtung 28 zugeführt wird. Damit der Grundschwingungs-Mitsystem-Blindstrom kompensiert wird, muß diese berechnete Mitsystem-Grundschwingungs-Blindleistung $q_{N,1+}$ zu Null geregelt werden. Dazu weist die Einrichtung 28 einen ersten PI-Regler 38 auf, der eingangsseitig mit dem ersten Eingang dieser Einrichtung 28 verknüpft ist. Am Ausgang dieses PI-Reglers 38 steht eine Blindleistungs-Stellgröße $S_{qy}$ als Reglerausgangsgröße an, die mittels eines ersten Multiplizierers 40 mit der ermittelten komplexen Amplitude $\underline{u}_{N,1+}$ des Netzspannungs-Grundsystems multipliziert wird. Am Ausgang dieses ersten Multiplizierers 40, der mit einem Eingang eines Addierers 42 verknüpft ist, steht eine Spannungs-Amplitude $\underline{u}_{K,1+\parallel}$ eines Kompensator-Spannungs-Grundschwingungs-Mitsystem-Raumzeigers $\underline{u}_{K,1+}$ an, die parallel zu der Amplitude $\underline{u}_{N,1+}$ des Netzspannungs-Grundschwingungs-Mitsystem-Raumzeigers $\underline{u}_{N,1+}$ verläuft. Mit dieser Spannungs-Amplitude $\underline{u}_{K,1+\parallel}$ wird mit Hilfe des Anpaßfilters 8 ein zur Mitsystem-Netzspannung $\underline{u}_{N,1+}$ senkrechter Anteil in den Strom $\underline{i}_N$ erzeugt, wodurch die Mitsystem-Grundschwingungs-Blindleistung $q_{N,1+}$ zu Null geregelt wird.

Der zweite Eingang der Einrichtung 28 ist ein zweiter PI-Regler 44 nachgeschaltet, an dessen Ausgang eine Strom-Stellgröße $S_{iy}$ als Reglerausgangsgröße ansteht. Diese skalare Strom-Stellgröße $S_{iy}$ wird mittels eines zweiten Multiplizierers 46 mit der negativen imaginären Einheit -j multipliziert, wodurch die Strom-Stellgröße $S_{iy}$ um -90° gedreht wird. Das Vorzeichen der imaginären Einheit j hängt vom verwendeten Zähl-Pfeilsystem ab. Da in der FIG 1 das Verbraucher-Zähl-Pfeilsystem verwendet wird, ist die imaginäre Einheit j negativ. Am Ausgang dieses zweiten Multiplizierers 46 steht eine komplexe Amplitude $\underline{u}_{K,1-}$ eines Kompensator-Spannungs-Grundschwingungs-Gegensystem-Raumzeigers $\underline{u}_{K,1-}$ an, mit dem das Grundschwingungs-Gegensystem im Netzstrom $\underline{i}_N$ zu Null geregelt wird.

Ferner weist diese Einrichtung 28 noch eine Einrichtung 48 auf, mit der eine Spannungsamplitude $\underline{u}_{K,1+\perp}$ des Kompensatorspannungs-Grundschwingungs-Mitsystem-Raumzeigers $\underline{u}_{K,1+}$ generiert wird, der senkrecht zur Amplitude $\underline{u}_{N,1+}$ des Netzspannungs-Grundschwingungs-Mitsystem-Raumzeigers $\underline{u}_{N,1+}$ verläuft. Diese Einrichtung 48 weist zwei Multiplizierer 50 und 52 auf, die hintereinander geschaltet sind. Der zweite Eingang des Multiplizierer 52 ist mit dem Ausgang des Zwischenkreis-Spannungs-Regelkreises 26 verknüpft, an dessen Ausgang eine Zwischenkreis-Stellgröße $S_{dcy}$ ansteht. Der eine Eingang des Multiplizierers 50 ist mit dem ersten Ausgang der Identifizierungs-Einrichtung 22 verbunden, wobei an seinem zweiten Eingang eine negative imaginäre Einheit -j ansteht. Da gemäß der FIG 1 das Verbraucher-Zähl-Pfeilsystem verwendet wird, wird mit der negativen imaginären Einheit j multipliziert. Mittels dieses Multiplizierers 50 wird die komplexe Amplitude $\underline{u}_{N,1+}$ um -90° gedreht, die anschließend mit der Zwischenkreis-Stellgröße $S_{dcy}$ multipliziert wird. Am Ausgang dieses Multiplizierers 52 steht dann die Spannungs-Amplitude $\underline{u}_{K,1+\perp}$ des Kompensatorspannungs-Grundschwingungs-Mitsystem-

Raumzeigers $\underline{u}_{K,1+}$ an, die eine ermittelte Zwischenkreis-Spannungsdifferenz $\Delta V_{dc}$ zu Null regelt.

Die Zwischenkreis-Stellgröße $S_{dcy}$ wird mittels des Zwischenkreis-Spannungs-Regelkreises 26 bestimmt. Dazu weist dieser Regelkreis 26 eingangsseitig einen Vergleicher 54 auf, an dessen nichtinvertierenden Eingang ein Zwischenkreis-Spannungs-Sollwert $V_{dcsoll}$ und an dessen invertierenden Eingang ein ermittelter Zwischenkreis-Spannungs-Istwert $V_{dc}$ anstehen. Am Ausgang dieses Vergleichers 54 steht eine Zwischenkreis-Spannungsdifferenz $\Delta V_{dc}$ an. Diese Regelabweichung $\Delta V_{dc}$ wird mittels eines Verzögerungsgliedes 56 erster Ordnung geglättet, bevor diese mit einem P-Regler 58 verstärkt wird. Diese Glättung der Regelabweichung $\Delta V_{dc}$ ist erforderlich, weil der Zwischenkreis-Spannungs-Istwert $V_{dc}$ durch die Lastsymmetrierung im allgemeinen einen Wechselanteil mit doppelter Netzfrequenz enthält, der durch den P-Regler 58 nicht verstärkt werden darf. Ein I-Regler 60, der eingangsseitig mit dem Ausgang des Vergleichers 54 verknüpft ist, beseitigt die bleibende Regelabweichung, die bei ausschließlicher Verwendung eines P-Reglers 58 entstehen würde. Die Reglerausgangsgrößen des I- und P-Reglers 60 und 58 werden mittels eines Addierers 62 zur Zwischenkreis-Stellgröße $S_{dcy}$ überlagert.

Der ausgangsseitige Raumzeiger-Bildner 30 weist eingangsseitig zwei Multiplizierer 64 und 66 auf, die ausgangsseitig jeweils mit einem Eingang eines Addierers 68 verbunden sind. Ausgangsseitig ist dieser Addierer 68 mit einem zweiten Multiplizierer 70 verbunden, dessen zweiter Eingang mit dem Ausgang eines Reziprok-Bildners 72 verknüpft ist, an dessen Eingang ein ermittelter Zwischenkreis-Spannungs-Istwert $V_{dc}$ ansteht. Der Ausgang des weiteren Multiplizierers 70, an dem ein Übertragungsverhältnis-Raumzeiger $\underline{\ddot{u}}$ ansteht, ist mit dem Pulsweitenmodulator 18 der Regel- und Steuereinrichtung 10 des Pulsstromrichters 4 verknüpft, der in Abhängigkeit dieses Übertragungsverhältnis-Raumzeigers $\underline{\ddot{u}}$ Steuersignale $S_v$ für den Pulsstromrichter 4 generiert, so daß dieser Pulsstromrichter 4 den ermittelten Kompensatorspannungs-Grundschwingungs-Raumzeiger $\underline{u}_{K,1}$ generiert. Die eingangsseitigen Multiplizierer 64 und 66 dieses Raumzeiger-Bildners 30 sind jeweils mit einem Ausgang der Einrichtung 28 verbunden, an denen jeweils eine komplexe Amplitude $\underline{u}_{K,1+}$ und $\underline{u}_{K,1-}$ eines Kompensatorspannungs-Grundschwingungs-Mit- und Gegensystem-Raumzeigers $\underline{u}_{K,1+}$ und $\underline{u}_{K,1-}$ ansteht. Damit aus diesen ermittelten Amplituden $\underline{u}_{K,1+}$ und $\underline{u}_{K,1-}$ die Mit- und Gegensysteme-Raumzeiger $\underline{u}_{K,1+}$ und $\underline{u}_{K,1-}$ werden, werden diese komplexen Amplituden $\underline{u}_{K,1+}$ und $\underline{u}_{K,1-}$ mit einem Einheits-Raumzeiger $e^{+j\omega t}$ und $e^{-j\omega t}$ des Mit- und Gegensystems multipliziert. Die Überlagerung dieser Kompensatorspannungs-Grundschwingungs-Mit- und Gegensystem-Raumzeiger $\underline{u}_{K,1+}$ und $\underline{u}_{K,1-}$ ergibt den Kompensatorspannungs-Raumzeiger $\underline{u}_{K,1}$, den der Pulsstromrichter 4 generieren muß, damit die berechnete Mitsystem-Grundschwingungs-Blindleistung $q_{N,1+}$, das Grund-

schwingungs-Gegensystem im Netzstrom $\underline{i}_{N,1-}$ und die Zwischenkreis-Spannungsdifferenz $\Delta V_{dc}$ zu Null geregelt werden.

Somit erhält man ein Verfahren für eine Kompensationseinrichtung 2 mit einem Pulsstromrichter 4 mit wenigstens einem kapazitiven Speicher 6, der parallel zum Netz 14 angekoppelt ist, mit der eine hochdynamische Lastsymmetrierung und Blindleistungskompensation erreicht wird. Durch diese hochdynamische Lastsymmetrierung und Blindleistungskompensation werden unerwünschte Netzspannungsänderungen, die Flicker verursachen, weitestgehend vermieden. Das heißt, die Last selbst erscheint aus Sicht des Netzes 14 bezüglich der Grundschwingung wie ein dreiphasiger, symmetrischer ohmscher Widerstand.

**Patentansprüche**

1. Verfahren zur Verbesserung der Stromqualität eines Netzes (14) mittels einer parallel zum Netz (14) angekoppelten Kompensationseinrichtung (2), die einen Pulsstromrichter (4) mit wenigstens einem kapazitiven Speicher (6), einen Anpaßfilter (8) und eine Regel- und Steuereinrichtung (10) aufweist, mit folgenden Verfahrensschritten:

   a) aus den ermittelten Netzspannungs- und Netzstrom-Raumzeigern ($\underline{u}_N$, $\underline{i}_N$) werden eine Mitsystem-Grundschwingungs-Blindleistung ($q_{N,1+}$) und eine komplexe Amplitude ($\underline{i}_{N,1-}$) eines Netzstrom-Grundschwingungs-Gegensystems bestimmt,

   b) aus der ermittelten Mitsystem-Grundschwingungs-Blindleistung ($q_{N,1+}$), einer aus einem ermittelten Zwischenkreis-Spannungs-Istwert ($V_{dc}$) und einem Zwischenkreis-Spannungs-Sollwert ($V_{dcsoll}$) bestimmten Zwischenkreis-Stellgröße ($S_{dcy}$) und einer ermittelten komplexen Amplitude ($\underline{u}_{N,1+}$) eines Netzspannungs-Grundschwingungs-Mitsystems werden komplexe Amplituden ($\underline{u}_{K,1+\parallel}$, $\underline{u}_{K,1+\perp}$) eines parallel und eines senkrecht zu einem Netzspannungs-Grundschwingungs-Mitsystem-Raumzeiger ($\underline{u}_{N,1+}$) verlaufenden Kompensatorspannungs-Grundschwingungs-Mitsystem-Raumzeigers ($\underline{u}_{K,1+}$) ermittelt, aus denen eine komplexe Amplitude ($\underline{u}_{K,1+}$) des Kompensatorspannungs-Grundschwingungs-Mitsystem-Raumzeigers ($\underline{u}_{K,1+}$) gebildet wird, und aus der ermittelten komplexen Amplitude ($\underline{i}_{N,1-}$) eines Netzstrom-Grundschwingungs-Gegensystems wird eine komplexe Amplitude ($\underline{u}_{K,1-}$) eines Kompensatorspannungs-Grundschwingungs-Gegensystem-Raumzeigers ($\underline{u}_{K,1-}$) ermittelt,

   c) aus der ermittelten komplexen Amplitude ($\underline{u}_{K,1+}$) des Kompensatorspannungs-Grundschwingungs-Mitsystem-Raumzeigers ($\underline{u}_{K,1+}$)

und der ermittelten komplexen Amplitude ($\underline{u}_{K,1-}$) des Kompensatorspannungs-Grundschwingungs-Gegensystem-Raumzeigers ($\underline{u}_{K,1-}$) werden ein Kompensatorspannungs-Grundschwingungs-Mit- und Gegensystem-Raumzeiger ($\underline{u}_{K,1+}$, $\underline{u}_{K,1-}$) bestimmt, die überlagert einen Kompensatorspannungs-Grundschwingungs-Raumzeiger ($\underline{u}_{K,1}$) ergeben,

d) durch Division des ermittelten Kompensatorspannungs-Grundschwingungs-Raumzeiger ($\underline{u}_{K,1}$) mit dem ermittelten Zwischenkreis-Spannungs-Istwert ($V_{dc}$), wird ein Übertragungsverhältnis-Raumzeiger ($\underline{ü}$) gebildet, aus dem Steuersignale ($S_v$) für den Pulsstromrichter (4) generiert werden.

2. Verfahren nach Anspruch 1, wobei mittels einer diskreten komplexen Fouriertransformation und einer anschließenden Mittelwertbildung aus den ermittelten Netzspannungs- und Netzstrom-Raumzeigern ($\underline{u}_N$, $\underline{i}_N$) komplexe Amplituden ($\underline{u}_{N,1+}$, $\underline{i}_{N,1+}$) eines Grundschwingungs-Mitsystems berechnet werden, mit denen anschließend nach folgender Gleichung:

$$q_{N,1+} = \frac{3}{2} \cdot \text{Im}\{\underline{u}_{N,1+} \cdot \underline{i}^*_{N,1+}\}$$

die Mitsystem-Grundschwingungs-Blindleistung ($q_{N,1+}$) berechnet wird.

3. Verfahren nach Anspruch 1, wobei aus der berechneten Mitsystem-Grundschwingungs-Blindleistung ($q_{N,1+}$) eine skalare Blindleistung-Stellgröße ($S_{qy}$) erzeugt wird, die multipliziert mit der komplexen Amplitude ($\underline{u}_{N,1+}$) des Netzspannungs-Grundschwingungs-Mitsystems die komplexe Amplitude ($\underline{u}_{K,1+\|}$) der parallelen Kompensatorspannungs-Komponente ergibt.

4. Verfahren nach Anspruch 1, wobei aus der ermittelten komplexen Amplitude ($\underline{i}_{N,1-}$) eines Netzstrom-Grundschwingungs-Gegensystems eine skalare Strom-Stellgröße ($S_{iy}$) erzeugt wird, die multipliziert mit einer imaginären Einheit (-j) die komplexe Amplitude ($\underline{u}_{K,1-}$) des Kompensatorspannungs-Grundschwingungs-Gegensystems ergibt.

5. Verfahren nach Anspruch 1, wobei aus der ermittelten Zwischenkreis-Spannungsdifferenz ($\Delta V_{dc}$) eine Zwischenkreis-Stellgröße ($S_{dcy}$) erzeugt wird, die multipliziert mit einem Produkt aus komplexer Amplitude ($\underline{u}_{N,1+}$) des Netzspannungs-Grundschwingungs-Mitsystems und einer imaginären Einheit (-j) die komplexe Amplitude ($\underline{u}_{K,1+\perp}$) der senkrechten Kompensatorspannungs-Komponente ergibt.

6. Verfahren nach Anspruch 1, wobei die Kompensatorspannungs-Grundschwingungs-Mit- und Gegen-

system-Raumzeiger ($\underline{u}_{K,1+}$, $\underline{u}_{K,1-}$) jeweils durch eine Multiplikation der komplexen Amplituden ($\underline{u}_{K,1+}$, $\underline{u}_{K,1-}$) des Kompensatorspannungs-Grundschwingungs-Mit- und Gegensystems mit einem komplexen Einheits-Raumzeiger ($e^{+j\omega t}$, $e^{-j\omega t}$) erzeugt werden.

7. Vorrichtung zur Durchführung des Verfahrens nach Anspruch 1 für eine mittels einer parallel zum Netz (14) angekoppelten Kompensationseinrichtung (2), die einen Pulsstromrichter (4) mit wenigstens einem kapazitiven Speicher (6), einen (16) Anpaßfilter (8) und eine Regel- und Steuereinrichtung (10,16) aufweist, wobei die Regel- und Steuereinrichtung (10,16) eine Regeleinrichtung (16) zur Bestimmung eines Übertragungsverhältnis-Raumzeigers ($\underline{ü}$) mit einem nachgeschalteten Pulsweitenmodulator (18) aufweist, an dessen Ausgängen die Steuersignale ($S_v$) des Pulsstromrichters (4) anstehen,

**dadurch gekennzeichnet,**
**daß** die Regeleinrichtung (16)

- eine Identifizierungs-Einrichtung (22) zur Ermittlung von komplexen Amplituden ($\underline{u}_{N,1+}$, $\underline{i}_{N,1+}$, $\underline{i}_{N,1-}$),
- eine Recheneinheit (24) zur Berechnung einer Mitsystem-Grundschwingungs-Blindleistung ($q_{N,1+}$),
- einen Zwischenkreis-Spannungs-Regelkreis (26),
- eine Einrichtung (28) zur Bestimmung komplexer Amplituden ($\underline{u}_{K,1+}$, $\underline{u}_{K,1-}$) eines Kompensatorspannungs-Grundschwingungs-Mit- und Gegensystem-Raumzeigers ($\underline{u}_{K,1+}$, $\underline{u}_{K,1-}$) und
- einen Raumzeiger-Bildner (30) aufweist,

wobei

- der Identifizierungseinrichtung (22) eingangsseitig ermittelte Netzspannungs- und Netzstrom-Raumzeiger ($\underline{u}_N$, $\underline{i}_N$) zugeführt sind,
- die Recheneinheit (24) eingangsseitig mit der Identifizierungs-Einrichtung (22) verknüpft ist,
- die Bestimmungseinrichtung (28) eingangsseitig mit Ausgängen der Identifizierungs-Einrichtung (22), der Recheneinheit (24) und des Zwischenkreis-Spannungs-Regelkreises (26) verknüpft ist und
- der Raumzeiger-Bildner (30), an dessen einem Eingang ein Zwischenkreis-Spannungs-Istwert ($V_{dc}$) ansteht, der der Einrichtung (28) zur Bestimmung komplexer Amplituden ($\underline{u}_{K,1+}$, $\underline{u}_{K,1-}$) eines Kompensatorspannungs-Grundschwingungs-Mit- und Gegensystem-Raumzeigers nachgeschaltet ist.

8. Vorrichtung nach Anspruch 7, wobei die Identifizierungs-Einrichtung (22) zur Ermittlung von komplexen Amplituden ($\underline{u}_{N,1+}$, $\underline{i}_{N,1+}$, $\underline{i}_{N,1-}$) für jede Amplitudenbereehnung eine Recheneinheit (32,34,36) aufweist.

9. Vorrichtung nach Anspruch 7, wobei die Einrichtung (28) zur Bestimmung komplexer Amplituden ($\underline{u}_{K,1+}$, $\underline{u}_{K,1-}$) eines Kompensatorspannungs-Grundschwingungs-Mit- und Gegensystems zwei PI-Regler (38,44), vier Multiplizierer (40,46,50,52) und einen Addierer (42) aufweist, wobei ein erster PI-Regler (38) eingangsseitig mit dem Ausgang der Recheneinheit (24) zur. Berechnung der Mitsystem-Grundschwingungs-Blindleistung ($q_{N,1+}$) und ausgangsseitig mittels eines ersten Multiplizierers (40) mit einem ersten Eingang des Addierers (42) verknüpft ist, wobei der zweite Eingang dieses Multiplizierers (40) und dieses Addierers (42) mit einem ersten Ausgang der Identifizierungs-Einrichtung (22) verbunden ist, wobei der zweite PI-Regler (44) eingangsseitig mit einem dritten Ausgang der Identifizierungs-Einrichtung (22) und ausgangsseitig mit einem Eingang eines zweiten Multiplizierers (46) verbunden ist, an dessen zweiten Eingang eine imaginäre Einheit (-j) ansteht und dessen Ausgang der zweite Ausgang dieser Einrichtung (28) ist, wobei der erste Ausgang der Identifizierungs-Einrichtung (22) mit einem Eingang eines dritten Multiplizierers (50), an dessen zweiten Eingang eine imaginäre Einheit (-j) ansteht, verknüpft ist, und wobei der Ausgang des dritten Multiplizierers (50) mit einem Eingang eines vierten Multiplizierers (52) verbunden ist, dessen zweiter Eingang mit einem Ausgang des Zwischenkreis-Spannungs-Regelkreises (26) und dessen Ausgang mit einem weiteren Eingang des Addierers (42) verknüpft sind, dessen Ausgang ein erster Ausgang dieser Einrichtung (28) ist.

10. Vorrichtung nach Anspruch 7, wobei der Raumzeiger-Bildner (30) eingangsseitig zwei Multiplizierer (64,66) aufweist, die jeweils mit einem Eingang mit dem ersten und zweiten Ausgang der Einrichtung (28) verbunden sind, wobei jeweils am zweiten Eingang dieser Multiplizierer (64,66) ein Einheits-Raumzeiger ($e^{+j\omega t}$, $e^{-j\omega t}$) ansteht und wobei die Ausgänge dieser Multiplizierer (64,66) mittels eines Addierers (68) mit einem Eingang eines weiteren Multiplizierers (70) verknüpft sind, dessen zweiter Eingang mit einem Reziprok-Bildner (72) verbunden ist, an dessen Eingang ein Zwischenkreis-Spannungs-Istwert ($V_{dc}$) ansteht, und an dessen Ausgang der Übertragungsverhältnis-Raumzeiger ($\underrightarrow{ü}$) ansteht.

## Claims

1. Process for improving the current quality of a network (14) by means of a compensation device (2) coupled parallel to the network (14), which device has a pulse-controlled converter (4) with at least one capacitative memory (6), a matching filter (8) and an automatic control device (10), with the following process steps:

    a) from the determined line voltage and line current space vectors ($u_{\rightarrow N}$, $i_{\rightarrow N}$) a positive-phase-sequence system fundamental component reactive power ($q_{N,1+}$) and a complex amplitude ($\underline{i}_{N,1-}$) of a line current fundamental component negative-phase-sequence system are determined,

    b) from the determined positive-phase-sequence system fundamental component reactive power ($q_{N,1+}$), an intermediate circuit parameter ($S_{dcy}$) determined from a determined intermediate circuit voltage actual value ($V_{dc}$) and an intermediate circuit voltage nominal value ($V_{dcsoll}$), and a determined complex amplitude ($\underline{u}_{N,1+}$) of a line voltage fundamental component positive-phase-sequence system, complex amplitudes ($\underline{u}_{K,1+|}$, $U_{K,1+\perp}$) of a compensator voltage fundamental component positive-phase-sequence system space vector ($u_{\rightarrow K,1+}$) running parallel and perpendicular to a line voltage fundamental component positive-phase-sequence system space vector ($u_{\rightarrow N,1+}$) are determined, from which a complex amplitude ($\underline{u}_{k,1+}$) of the compensator voltage fundamental component positive-phase-sequence system space vector ($u_{\rightarrow K,1+}$) is formed, and from the determined complex amplitude ($\underline{i}_{N,1-}$) of a line current fundamental component negative-phase-sequence system, a complex amplitude ($\underline{u}_{K,1-}$) of a compensator voltage fundamental component negative-phase-sequence system space vector ($u_{\rightarrow K,1-}$) is determined,

    c) from the determined complex amplitude ($\underline{u}_{K,1+}$) of the compensator voltage fundamental component positive-phase-sequence system space vector ($u_{\rightarrow K,1+}$) and the determined complex amplitude ($\underline{u}_{K,1-}$) of the compensator voltage fundamental component negative-phase-sequence system space vector ($u_{\rightarrow K,1-}$), a compensator voltage fundamental component positive and negative-phase-sequence system space vector ($u_{\rightarrow K,1+}$, $u_{\rightarrow K,1-}$) is determined, which superposed give a compensator voltage fundamental component space vector ($u_{\rightarrow K,1}$),

    d) by division of the determined compensator voltage fundamental component space vector ($u_{\rightarrow K,1}$) with the determined intermediate circuit voltage actual value ($V_{dc}$), a transmission ratio

space vector ($\ddot{u}_{\rightarrow}$) is formed from which are generated control signals ($S_v$) for the pulse-controlled converter (4).

2. Process according to claim 1, wherein by means of a discrete complex Fourier transformation and a subsequent mean value formation, from the determined line voltage and line current space vectors ($u_{\rightarrow N}$, $i_{\rightarrow N}$), complex amplitudes ($\underline{u}_{N,1+}$, $\underline{i}_{N,1+}$) of a fundamental component positive-phase-sequence system are calculated with which subsequently using the following equation:

$$q_{N,1+} = \frac{2}{3} \cdot \text{Im}\,\{\underline{u}_{N,1+} \cdot \underline{i}^*_{N,1+}\}$$

the positive-phase-sequence system fundamental component reactive power ($q_{N,1+}$) is calculated.

3. Process according to claim 1, wherein from the calculated positive-phase-sequence system fundamental component reactive power ($q_{N,1+}$) a scalar reactive power parameter ($S_{qy}$) is generated which multiplied by the complex amplitude ($\underline{u}_{N,1+}$) of the line voltage fundamental component positive-phase-sequence system gives the complex amplitude ($\underline{u}_{k,1+l}$) of the parallel compensator voltage components.

4. Process according to claim 1, wherein from the determined complex amplitude ($\underline{i}_{N,1-}$) of a line current fundamental component negative-phase-sequence system, a scalar current parameter ($S_{iy}$) is produced which multiplied with an imaginary unit (-j) gives the complex amplitude ($\underline{u}_{k,1-}$) of the compensator voltage fundamental component negative-phase-sequence system.

5. Process according to claim 1, wherein from the determined intermediate circuit voltage difference ($\Delta V_{dc}$) an intermediate circuit parameter ($S_{dcy}$) is generated which multiplied with a product of complex amplitude ($\underline{u}_{N,1-}$) of the line voltage fundamental component positive-phase-sequence system and an imaginary unit (-j) gives the complex amplitude ($\underline{u}_{K,1-\perp}$) of the vertical compensator voltage components.

6. Process according to claim 1, wherein the compensator voltage fundamental component positive and negative-phase-sequence system space vectors ($u_{\rightarrow K,1+}$, $u_{\rightarrow K,1-}$) are each generated by multiplication of the complex amplitudes ($\underline{u}_{K,1+}$, $\underline{u}_{K,1-}$) of the compensator voltage fundamental component positive and negative-phase-sequence systems with a complex unit space vector ($e^{+j\omega t}$, $e^{-j\omega t}$).

7. Device for performance of the process according to claim 1 for a compensation device (2) coupled parallel to the network (14) which has a pulse-controlled converter (4) with at least one capacitive memory (6), a matching filter (8) and an automatic control device (16), wherein the automatic control device (16) has a regulator device (16) for determining a transmission ratio space vector ($\ddot{u}_{\rightarrow}$) with a subsequent pulse width modulator (18), at the outputs of which are available the control signals ($S_v$) of the pulse-controlled converter (4), **characterised in that** the regulator device (16) has

- an identification device (22) to determine complex amplitudes ($\underline{u}_{N,1+}$, $\underline{i}_{N,1+}$, $\underline{i}_{N,1-}$),
- a calculation unit (24) for calculating a positive-phase-sequence system fundamental component reactive power ($q_{N,1+}$),
- an intermediate circuit voltage control circuit (26),
- a device (28) to determine complex amplitudes ($\underline{u}_{K,1+}$, $\underline{u}_{K,1-}$) of a compensator voltage fundamental component positive and negative-phase-sequence system space vector ($u_{\rightarrow K,1+}$, $u_{\rightarrow K,1-}$), and
- a space vector formation unit (30),

wherein

- the line voltage and current space vectors ($u_{\rightarrow N}$, $i_{\rightarrow N}$) determined on the input side are supplied to the identification device (22),
- the calculation unit (24) is coupled on the input side with the identification device (22),
- the determination device is linked on the input side with outputs of the identification device (22), the calculation unit (24) and intermediate circuit voltage control circuit (26), and
- the space vector formation unit (30), at one input of which is present an intermediate circuit voltage actual value ($V_{dc}$), is connected after the device (28) to determine complex amplitudes ($\underline{u}_{K,1+}$, $\underline{u}_{K,1-}$) of a compensator voltage fundamental component positive and negative-phase-sequence system space vector.

8. Device according to claim 7, wherein the identification device (22) to determine complex amplitudes ($\underline{u}_{N,1+}$, $\underline{i}_{N,1+}$, $\underline{i}_{N,1-}$) has a calculation unit (32, 34, 36) for each amplitude calculation.

9. Device according to claim 7, wherein the device (28) to determine complex amplitudes ($\underline{u}_{K,1+}$, $\underline{u}_{K,1-}$) of a compensator voltage fundamental component positive and negative-phase-sequence system has two PI regulators (38, 44), four multipliers (40, 46, 50, 52) and an adder (42), wherein a first PI regulator (38) is linked on the input side to the output of the calculation unit (24) to calculate the positive-phase-sequence system fundamental component reactive power ($q_{N,1+}$) and on the output side by means of a first multiplier (40) with a first input of the adder (42), wherein the second input of this multiplier (40) and this adder (42) is connected with the first output of the identification device (22), wherein the second PI regulator (44) is connected on the input side with a third output of the identification device (22) and on the output side with an input of a second multiplier (46), at the second input of which is present an imaginary unit (-j) and the output of which is the second output of this device (28), wherein the first output of the identification device (22) is linked to an input of a third multiplier (50) at the second input of which is present an imaginary unit (-j), and wherein the output of the third multiplier (50) is connected with an input of a fourth multiplier (52), the second input of which is linked to an output of the intermediate circuit voltage control circuit (26) and the output of which is linked with a further input of the adder (42), the output of which is a first input of this device (28).

**10.** Device according to claim 7, wherein the space vector formation unit (30) has on the input side two multipliers (64, 66) each of which are connected via one input with the first and second output of the device (28), wherein in each case at the second input of these multipliers (64, 66) is present a unit space vector ($e^{+j\omega t}$, $e^{-j\omega t}$) and wherein the outputs of these multipliers (64, 66) are linked by means of an adder (68) with an input of a further multiplier (70), the second input of which is connected with a reciprocal value formation unit (72), at the input of which is present an intermediate circuit voltage actual value ($V_{dc}$) and at the output of which is present the transmission ratio space vector ($\ddot{u}_{\rightarrow}$).

## Revendications

**1.** Procédé pour l'amélioration de la qualité du courant d'un réseau (14) au moyen d'un dispositif de compensation (2) qui est couplé en parallèle avec le réseau (14) et qui comporte un convertisseur à impulsions (4) avec au moins un accumulateur capacitif (6), un filtre d'adaptation (8) et un dispositif de régulation et de commande (10), avec les étapes de procédé suivantes :

a) à partir des vecteurs spatiaux de tension de réseau et de courant de réseau ($\underline{u}_N$, $\underline{i}_N$) déterminés, on détermine une puissance réactive d'oscillation fondamentale de système direct ($q_{N,1+}$) et une amplitude complexe ($\underline{i}_{N,1-}$) d'un système inverse d'oscillation fondamentale de courant de réseau,

b) à partir de la puissance réactive d'oscillation fondamentale de système direct ($q_{N,1+}$) déterminée, d'une grandeur réglante de circuit intermédiaire ($S_{dcy}$), déterminée à partir d'une valeur réelle de tension de circuit intermédiaire ($V_{dc}$) déterminée et d'une valeur de consigne de tension de circuit intermédiaire ($V_{dcsoll}$), et d'une amplitude complexe déterminée ($\underline{u}_{N,1+}$) d'un système direct d'oscillation fondamentale de tension de réseau, on détermine des amplitudes complexes ($\underline{u}_{K,1+\parallel}$, $\underline{u}_{K,1+\perp}$) d'un vecteur spatial de système direct d'oscillation fondamentale de tension de compensateur ($\underline{u}_{\rightarrow K,1+}$) s'étendant en parallèle avec un vecteur spatial de système direct d'oscillation fondamentale de tension de réseau ($\underline{u}_{\rightarrow N,1+}$) et d'un autre s'étendant perpendiculairement à celui-ci, amplitudes à partir desquelles on forme une amplitude complexe ($\underline{u}_{K,1+}$) du vecteur spatial de système direct d'oscillation fondamentale de tension de compensateur ($\underline{u}_{\rightarrow K,1+}$), et à partir de l'amplitude complexe ($\underline{i}_{N,1-}$) déterminée d'un système inverse d'oscillation fondamentale de courant de réseau, on détermine une amplitude complexe ($\underline{u}_{K,1-}$) d'un vecteur spatial de système inverse d'oscillation fondamentale de tension de compensateur ($\underline{u}_{\rightarrow K,1-}$),

c) à partir de l'amplitude complexe ($\underline{u}_{K,1+}$) déterminée du vecteur spatial de système direct d'oscillation fondamentale de tension de compensateur ($\underline{u}_{\rightarrow K,1+}$) et de l'amplitude complexe ($\underline{u}_{K,1-}$) déterminée du vecteur spatial de système inverse d'oscillation fondamentale de tension de compensateur ($\underline{u}_{\rightarrow K,1-}$), on détermine des vecteurs spatiaux de système direct et de système inverse d'oscillation fondamentale de tension de compensateur ($\underline{u}_{\rightarrow K,1+}$, $\underline{u}_{\rightarrow K,1-}$) qui, superposés, donnent un vecteur spatial d'oscillation fondamentale de tension de compensateur ($\underline{u}_{\rightarrow K,1}$),

d) par division du vecteur spatial d'oscillation fondamentale de tension de compensateur déterminé ($\underline{u}_{\rightarrow K,1}$) par la valeur réelle de tension de circuit intermédiaire déterminée ($V_{dc}$), on forme un vecteur spatial de rapport de transmission ($\ddot{u}_{\rightarrow}$) à partir duquel sont produits des signaux de commande ($S_v$) pour le convertisseur à impulsions (4).

**2.** Procédé selon la revendication 1, dans lequel, au moyen d'une transformation de Fourier complexe discrète puis d'une formation de valeur moyenne, on calcule à partir des vecteurs spatiaux de tension de réseau et de courant de réseau déterminés ($\underline{u}_N$, $\underline{i}_N$) des amplitudes complexes ($\underline{u}_{N,1+}$, $\underline{i}_{N,1+}$) d'un système direct d'oscillation fondamentale avec lesquelles on calcule ensuite selon l'équation suivante

$$q_{N,1+} = \frac{3}{2} \cdot \text{Im}\{\underline{u}_{N,1+} \cdot \underline{i}^*_{N,1+}\}$$

la puissance réactive d'oscillation fondamentale de système direct ($q_{N,1+}$).

3. Procédé selon la revendication 1, dans lequel, à partir de la puissance réactive d'oscillation fondamentale de système direct ($q_{N,1+}$) calculée, on produit une grandeur réglante de puissance réactive scalaire ($S_{qy}$) qui donne, multipliée par l'amplitude complexe ($\underline{u}_{N,1+}$) du système direct d'oscillation fondamentale de tension de réseau, l'amplitude complexe ($\underline{u}_{K,1+\parallel}$) de la composante parallèle de la tension de compensateur.

4. Procédé selon la revendication 1, dans lequel, à partir de l'amplitude complexe déterminée ($\underline{i}_{N,1-}$) d'un système inverse d'oscillation fondamentale de courant de réseau, on produit une grandeur réglante de courant scalaire ($S_{iy}$) qui donne, multipliée par une unité imaginaire (-j), l'amplitude complexe ($\underline{u}_{K,1-}$) du système inverse d'oscillation fondamentale de tension de compensateur.

5. Procédé selon la revendication 1, dans lequel, à partir de la différence de tension de circuit intermédiaire ($\Delta V_{dc}$) déterminée, on produit une grandeur réglante de circuit intermédiaire ($S_{dcy}$) qui donne, multipliée par un produit formé de l'amplitude complexe ($\underline{u}_{N,1+}$) du système direct d'oscillation fondamentale de tension de réseau par une unité imaginaire (- j), l'amplitude complexe ($\underline{u}_{K,1+\perp}$) de la composante perpendiculaire de la tension de compensateur.

6. Procédé selon la revendication 1, dans lequel on produit les vecteurs spatiaux de système direct et de système inverse d'oscillation fondamentale de tension de compensateur ($\vec{u}_{K,1+}$, $\vec{u}_{K,1-}$) à chaque fois en multipliant l'amplitude complexe ($\underline{u}_{K,1+}$, $\underline{u}_{K,1-}$) du système direct et du système inverse d'oscillation fondamentale de tension de compensateur par un vecteur spatial unité complexe ($e^{+j\omega t}$, $e^{-j\omega t}$).

7. Dispositif pour la mise en oeuvre du procédé selon la revendication 1 au moyen d'un dispositif de compensation (2) qui est couplé parallèlement au réseau (14) et qui comporte un convertisseur à impulsions (4) avec au moins un accumulateur capacitif (6), un filtre d'adaptation (8) et un dispositif de régulation et de commande (10, 16), dans lequel le dispositif de régulation et de commande (10, 16) comporte un dispositif de régulation (16) pour la détermination d'un vecteur spatial de rapport de transmission ( $\vec{\ddot{u}}$ ) avec un modulateur de largeur d'impulsion (18) branché du côté aval, aux sorties duquel se trouvent les signaux de commande ($S_v$) du convertisseur à impulsions (4),

**caractérisé par le fait que**
le dispositif de régulation (16) comporte

- un dispositif d'identification (22) pour la détermination d'amplitudes complexes ($\underline{u}_{N,1+}$, $\underline{i}_{N,1+}$, $\underline{i}_{N,1-}$),
- une unité de calcul (24) pour le calcul d'une puissance réactive d'oscillation fondamentale de système direct ($q_{N,1+}$),
- un circuit de régulation de tension de circuit intermédiaire (26),
- un dispositif (28) pour la détermination d'amplitudes complexes ($\underline{u}_{K,1+}$, $\underline{u}_{K,1-}$) de vecteurs spatiaux de système direct et de système inverse d'oscillation fondamentale de tension de compensateur ($\vec{u}_{K,1+}$, $\vec{u}_{K,1-}$) et
- un dispositif de formation de vecteur spatial (30),

dans lequel

- le dispositif d'identification (22) reçoit en entrée des vecteurs spatiaux de tension de réseau et de courant de réseau ($\vec{u}_N$, $\vec{i}_N$) déterminés,
- l'unité de calcul (24) est combinée en entree au dispositif d'identification (22),
- le dispositif de détermination (28) est combiné en entrée à des sorties du dispositif d'identification (22), de l'unité de calcul (24) et du circuit de régulation de tension de circuit intermédiaire (26), et
- le dispositif de formation de vecteur spatial (30), à une entrée duquel se trouve une valeur réelle de tension de circuit intermédiaire ($V_{dc}$), est branché du côté aval du dispositif (28) pour la détermination d'amplitudes complexes ($\underline{u}_{K,1+}$, $\underline{u}_{K,1-}$) de vecteurs spatiaux de système direct et de système inverse d'oscillation fondamentale de tension de compensateur.

8. Dispositif selon la revendication 7, dans lequel le dispositif d'identification (22) pour la détermination d'amplitudes complexes ($\underline{u}_{N,1+}$, $\underline{i}_{N,1+}$, $\underline{i}_{N,1-}$) comporte une unité de calcul (32, 34, 36) pour chaque calcul d'amplitude.

9. Dispositif selon la revendication 7, dans lequel le dispositif (28) pour la détermination d'amplitudes complexes ($\underline{u}_{K,1+}$, $\underline{u}_{K,1-}$) d'un système direct et d'un système inverse d'oscillation fondamentale de tension de compensateur comporte deux régulateurs PI (38, 44), quatre multiplicateurs (40, 46, 50, 52) et un additionneur (42), un premier régulateur PI (38) étant combiné en entrée à la sortie de l'unité de calcul (24) pour le calcul de la puissance réactive d'oscillation fondamentale de système direct ($q_{N,1+}$) et en sortie au moyen d'un premier multiplicateur (40) à une première entrée de l'additionneur (42), la deuxième entrée de ce multiplicateur (40) et de cet additionneur (42) étant reliée à une première sortie du dispositif d'identification (22), le deuxième régulateur PI (44) étant relié en entrée à une troisième sortie du dispositif d'identification (22) et en sortie à une entrée d'un deuxième multiplicateur (46) à la deuxième entrée duquel se trouve une unité imaginaire (-j) et dont la sortie est la deuxième sortie de ce dispositif (28), la première sortie du dispositif d'identification (22) étant combinée à une entrée d'un troisième multiplicateur (50) à la deuxième entrée duquel se trouve une unité imaginaire (-j) et la sortie du troisième multiplicateur (50) étant reliée à une entrée d'un quatrième multiplicateur (52) dont la deuxième entrée est combinée à une sortie du circuit de régulation de tension de circuit intermédiaire (26) et dont la sortie est combinée à une autre entrée de l'additionneur (42) dont la sortie est une première sortie de ce dispositif (28).

10. Dispositif selon la revendication 7, dans lequel le dispositif de formation de vecteur spatial (30) comporte en entrée deux multiplicateurs (64, 66) qui sont reliés chacun par une entrée à la première sortie et à la deuxième sortie du dispositif (28), dans lequel il y a à chaque fois à la deuxième entrée de ces multiplicateurs (64, 66) un vecteur spatial unité ($e^{+j\omega t}$, $e^{-j\omega t}$) et dans lequel les sorties de ces multiplicateurs (64, 66) sont combinées au moyen d'un additionneur (68) à une entrée d'un autre multiplicateur (70) dont la deuxième entrée est reliée à un dispositif de formation réciproque (72) à l'entrée duquel se trouve une valeur réelle de tension de circuit intermédiaire ($V_{dc}$) et à la sortie duquel se trouve le vecteur spatial de rapport de transmission ($\underline{\ddot{u}}$).

EP 1 002 353 B1

$L_N$

20

$\underset{\rightarrow N}{i}$  $\underset{\rightarrow L}{i}$

$\underset{\rightarrow}{u}$  14

$\underset{\rightarrow N}{u}$  $\underset{\rightarrow K}{i}$

12

2

8

$L_K$

4

6

$\underset{\rightarrow K}{u} = \underset{\rightarrow}{\ddot{u}} * 2E_d$

$2E_d = V_{dc}$

6

$S\nu$  $\nu = 6$

10

$\underset{\rightarrow N}{u}$

$\underset{\rightarrow N}{i}$

18

$\underset{\rightarrow}{\ddot{u}}$

16

$V_{dc}$

# FIG 1

(Stand der Technik)

**FIG 2A**

$$\frac{1}{T/2} \cdot \int_{t-T/2}^{t} \underline{u}_N \cdot e^{-j \cdot \omega \cdot \tau} \, d\tau \qquad 32$$

$$\frac{1}{T/2} \cdot \int_{t-T/2}^{t} \underline{i}_N \cdot e^{-j \cdot \omega \cdot \tau} \, d\tau \qquad 34$$

$$\frac{1}{T/2} \cdot \int_{t-T/2}^{t} \underline{i}_N \cdot e^{+j \cdot \omega \cdot \tau} \, d\tau \qquad 36$$

$$\frac{3}{2} \cdot \text{Im} \left\{ \underline{u}_{N,1+} \cdot \underline{i}^*_{N,1+} \right\} \qquad 24$$

$\underline{u}_N$  $\underline{i}_N$  $\underline{u}_{N,1+}$  $\underline{i}_{N,1+}$  $q_{N,1+}$  $\underline{i}_{N,1-}$

22

$V_{dc\ soll}$  $V_{dc}$  $\Delta V_{dc}$  $T_{1dc}$  $V_{Pdc}$  $V_{Idc}$  $S_{dcy}$

26  54  56  58  60  62

| FIG 2A | FIG 2B |

**FIG 2**

EP 1 002 353 B1

$\underline{u}_{N,1+}$

$q_{N,1+}$

$v_{Pq}$

$v_{Iq}$

$\underline{38}$

$S_{qy}$

40

42

$\underline{u}_{N,1+}$

$\underline{u}_{K,1+II}$

$\underline{u}_{K,1+}$

64

x

$e^{+j\cdot\omega\cdot t}$

$\underline{u}_{\rightarrow K,1+}$

$\underline{u}_{\rightarrow K,1}$

30

$\underline{28}$

$\underline{i}_{N,1-}$

$v_{P-}$

$v_{I-}$

$\underline{44}$

$S_{iy}$

-j

x

46

$\underline{u}_{K,1-}$

$e^{-j\cdot\omega\cdot t}$

66

x

68

x

70

$\underline{u}_{N,1+}$

-j

50

x

52

x

$\underline{u}_{K,1+\perp}$

$\underline{u}_{\rightarrow K,1-}$

$S_{dcy}$

$\underline{48}$

$\ddot{u}_{\rightarrow}$

72

$\dfrac{1}{x}$

FIG 2B

EP 1 002 353 B1